# EUROPEAN PATENT APPLICATION

(11) **EP 3 222 453 A1**
(43) Date of publication of application: **27.09.2017**
(21) Application number: 15861298.6
(22) Date of filing: 06.11.2015
(51) Int. Cl.: B60K 1/04, B60R 21/13, B62D 25/20, H01M 2/10

(54) **BATTERY PROTECTION MEMBER**

(30) Priority: 17.11.2014 JP 2014232482
(71) Applicant: Hitachi Automotive Systems, Ltd., Hitachinaka-shi, Ibaraki 312-8503 (JP)
(72) Inventor: YAMAMOTO, Tatsuyuki, Atsugi-shi Kanagawa 243-8510 (JP)
(74) Representative: Hoefer & Partner Patentanwälte mbB
(86) International application number: PCT/JP2015/081298
(87) International publication number: WO 2016/080214

(57) **Abstract**

An object of the present invention is to provide a battery protection member capable of achieving both securement of a capability to allow a passenger to reside in a vehicle and protection of a battery at the same time. According to one aspect of the present invention, a battery protection member includes a hollow-shaped battery containing frame extending in a vehicle lateral direction of the vehicle. The battery containing frame includes a surface where a seat occupied by a driver is disposed on an outer surface side thereof. The battery containing frame is configured to contain the battery on an inner surface side thereof.

## Description

### TECHNICAL FIELD

The present invention relates to a member for protecting a battery mainly mounted on an electric vehicle.

### BACKGROUND ART

There has been known a technique discussed in PTL 1 as a technique regarding an electric vehicle. In this patent literature, a battery is mounted behind seats of the vehicle or below a floor of the vehicle.

### CITATION LIST

### PATENT LITERATURE

PTL 1: Japanese Patent Application Public Disclosure No. 2010-208406

### SUMMARY OF INVENTION

### TECHNICAL PROBLEM

However, there is no sufficient disclosure regarding protection of the battery. The present invention has been made in consideration of the above-described drawback, and an object thereof is to provide a battery protection member capable of achieving both securement of a capability to allow a passenger to reside in the vehicle and the protection of the battery at the same time.

### SOLUTION TO PROBLEM

To achieve the above-described object, according to one aspect of the present invention, a battery protection member includes a hollow-shaped battery containing frame that extends in a vehicle lateral direction of a vehicle. The battery containing frame includes a surface where a seat occupied by a driver is disposed on an outer surface side thereof. The battery containing frame is configured to contain a battery on an inner surface side thereof.

### ADVANTAGEOUS EFFECTS OF INVENTION

Therefore, both the securement of the capability to allow the passenger to reside in the vehicle and the protection of the battery can be achieved at the same time.

### BRIEF DESCRIPTION OF DRAWINGS

Fig. 1 is a schematic perspective view illustrating a compact electric automobile on which a battery protection member according to a first embodiment is mounted.
Fig. 2 is a schematic top view of the compact electric automobile on which the battery protection member according to the first embodiment is mounted.
Fig. 3 is a schematic side view of the compact electric automobile on which the battery protection member according to the first embodiment is mounted.
Fig. 4 is a perspective view as viewed from a rear side, illustrating only a frame portion serving as a basic structure of the compact electric automobile according to the first embodiment.
Fig. 5 is a perspective view as viewed from a front side, illustrating the basic structure of the compact electric automobile according to the first embodiment.
Fig. 6 is a schematic view illustrating a configuration around a front frame according to the first embodiment.
Fig. 7 is a schematic view illustrating a configuration around a rear frame according to the first embodiment.
Fig. 8 is a schematic view illustrating a battery configuration according to the first embodiment.
Fig. 9 is a schematic view illustrating a configuration of a battery unit according to a second embodiment.
Fig. 10 is a schematic view illustrating a configuration of a battery unit according to a third embodiment.
Fig. 11 is a schematic view illustrating a configuration of a battery unit according to a fourth embodiment.
Fig. 12 is a schematic view illustrating a compact vehicle including a battery protection member according to a fifth embodiment.
Fig. 13 is a schematic view illustrating a compact vehicle including a battery protection member according to a sixth embodiment.

### DESCRIPTION OF EMBODIMENTS

### [First Embodiment]

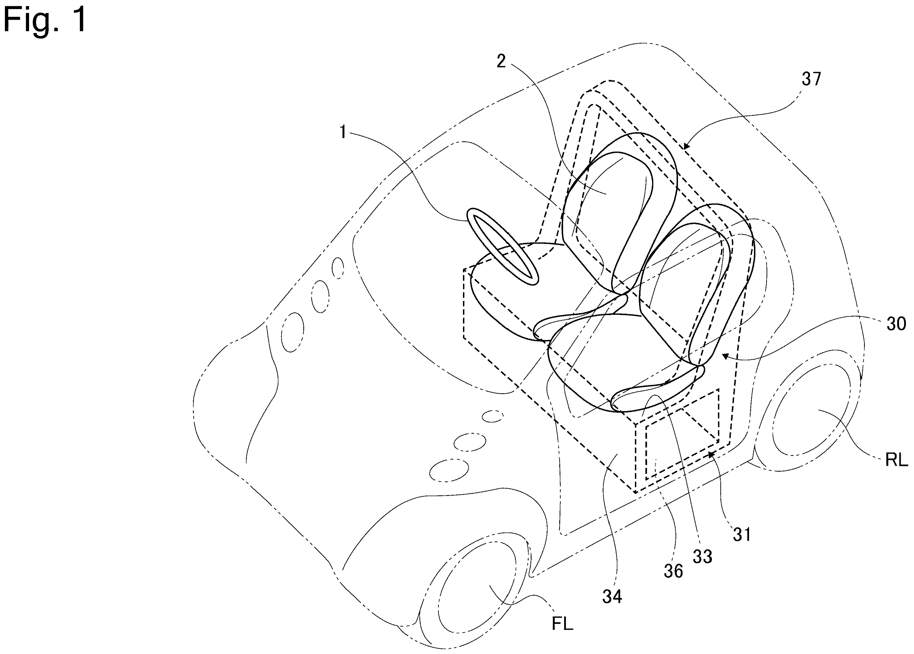

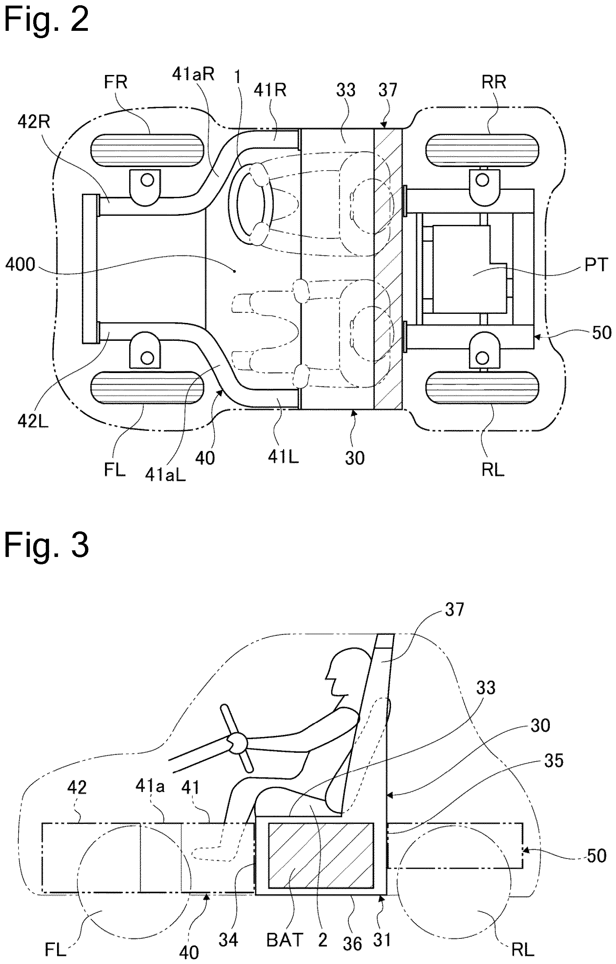

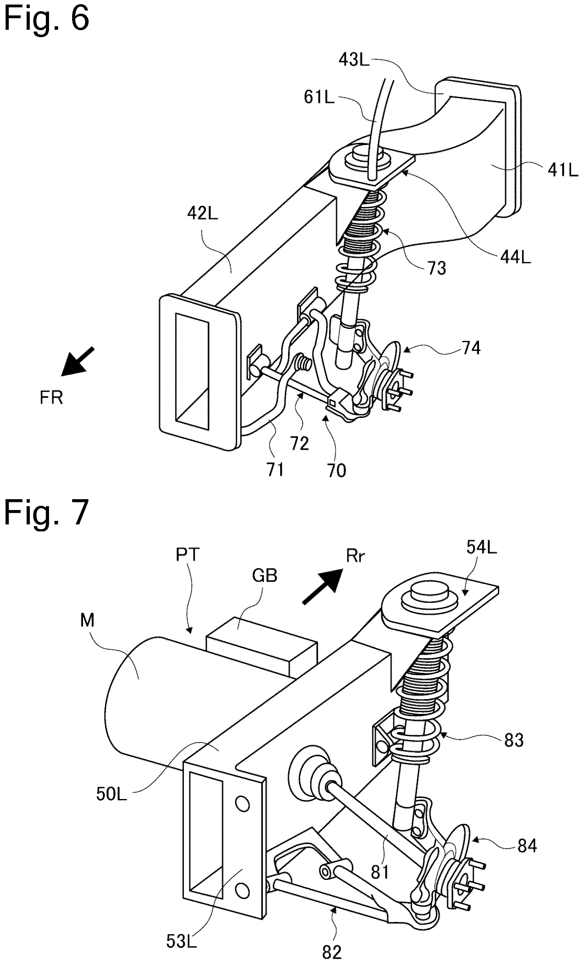

Fig. 1 is a schematic perspective view illustrating a compact electric automobile on which a battery protection member according to a first embodiment is mounted. Fig. 2 is a schematic top view of the compact electric automobile on which the battery protection member according to the first embodiment is mounted. Fig. 3 is a schematic side view of the compact electric automobile on which the battery protection member according to the first embodiment is mounted. This compact electric automobile is a two-seated rear-wheel drive electric automobile, but may be a single passenger vehicle with a single seat positioned at a generally central portion in a vehicle lateral direction. The compact electric automobile includes a battery containing frame 30, which is a battery protection member, between front wheels FL and FR and rear wheels RL and RR. The compact electric automobile includes a front frame 40 in front of the battery containing frame 30. The compact electric automobile includes a rear frame 50 behind the battery containing frame 30. The compact electric automobile includes a powertrain TP, which includes a driving motor M and a speed reducer GB (refer to Fig. 7), in the rear frame 50. Two passenger seats 2 are disposed on the battery containing frame 30. A driver is seated on the seat 2, and causes the automobile to run by operating a steering wheel 1, a not-illustrated accelerator pedal and brake pedal, and the like and driving the rear wheels RL and RR. A body of the compact electric automobile according to the first embodiment is made from a resin material, which reduces a weight of the automobile.

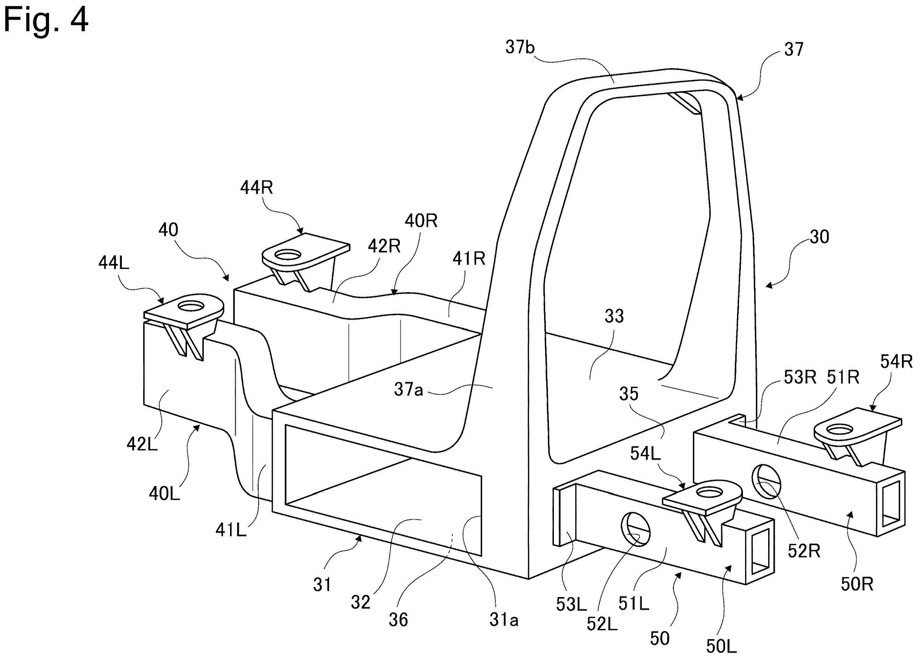

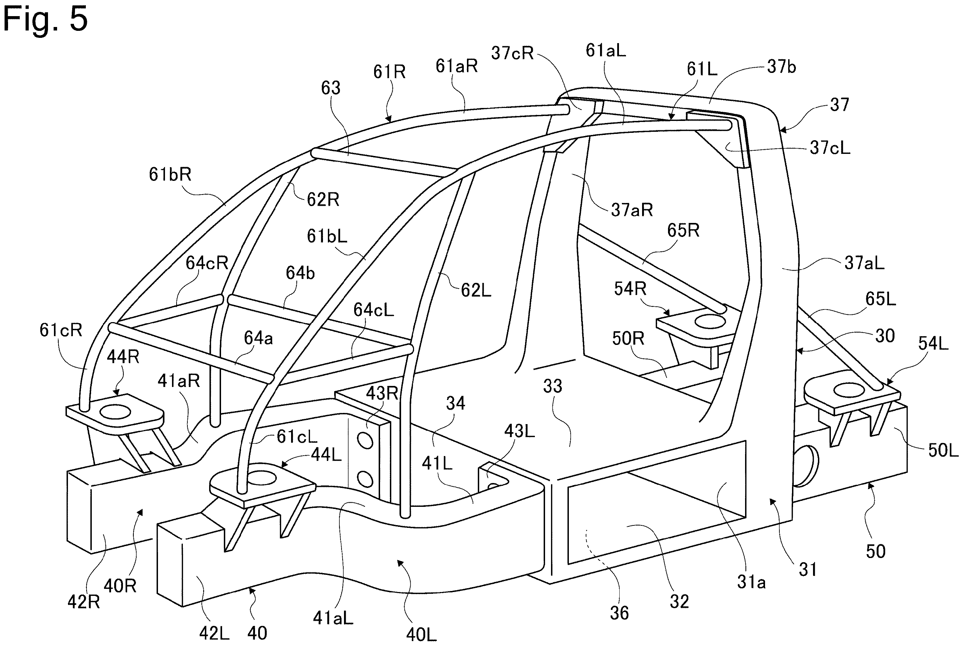

Fig. 4 is a perspective view as viewed from a rear side, illustrating only a frame portion serving as a basic structure of the compact electric automobile according to the first embodiment. Fig. 5 is a perspective view as viewed from a front side, illustrating the basic structure of the compact electric automobile according to the first embodiment. The battery containing frame 30 according to the first embodiment is formed by aluminum die-casting, but may be formed by a welding connection or may be formed with use of a carbon fiber. How the battery containing frame 30 is formed is not specifically limited.

The battery containing frame 30 includes a battery containing portion 31, which is a rectangular hollow-shaped member extending in the vehicle lateral direction of the vehicle. The battery containing portion 31 includes an opening portion 31a for inserting a battery unit BAT, which will be descried below, from a side surface thereof. The opening portion 31a is formed on only one side of the battery containing portion 31 in the vehicle lateral direction, but may be formed on both sides. Where the opening portion 31a is formed is not especially limited. The unit battery BAT is contained in an inner surface side 32 of the battery containing portion 31. The opening portion 31a is liquid-tightly closed by a not-illustrated closing member after the battery unit BAT is inserted. A top surface 33, on which the seats 2 are disposed, is formed on an outer surface side and a vehicle upper side of the battery containing portion 31. Further, the battery containing frame 30 includes a front-side attachment surface 34, to which the front frame 40 is attached, on the outer surface side and a vehicle front side of the battery containing portion 31. Further, the battery containing frame 30 includes a rear-side attachment surface 35, to which the rear frame 50 is attached, on the outer surface side and a vehicle rear side of the battery containing portion 31. Further, the battery containing frame 30 includes a floor surface 36, which forms a vehicle floor, on the outer surface side and a vehicle lower side of the battery containing portion 31. In other words, the battery containing portion 31 has a hollow-shaped shape surrounded by the top surface 33, the front-side attachment surface 34, the rear-side attachment surface 35, and the floor surface 36.

Further, the battery containing frame 30 includes a passenger protection roll bar 37 hung across the battery containing frame 30 in the vehicle lateral direction on the top surface 33 and the vehicle rear side of the battery containing frame 30. The passenger protection roll bar 37 includes side members 37a and a coupling member 37b. The side members 37a extend upward from both ends of the top surface 33 in the vehicle lateral direction. The coupling member 37b couples the side members 37a to each other on a roof side of the vehicle. The side members 37a are formed on an outer side in the vehicle lateral direction with respect to the seats 2. The coupling member 37b is formed on an upper side with respect to a vertical position of a head of the driver when the driver is seated on the seat 2. It is preferable that a position of the coupling member 37b in a vehicle longitudinal direction is a position that coincides with a position of the head of the driver when the driver is seated in the vehicle longitudinal direction.

The front frame 40 includes a right-side front frame 40R and a left-side front frame 40L attached around both ends of the front-side attachment surface 34 in the vehicle lateral direction. The right-side and left-side front frames 40R and 40L are symmetrically shaped, and will be described omitting indices "R" indicating the right side and "L" indicating the left side when describing a portion thereof common in the both frames.

The front frame 40 includes a front flange portion 43, a floor forming portion 41, a bent portion 41a, and a front wheel support portion 42. The front flange portion 43 is attached to the front attachment surface 34 by a fixation method or member, such as a bolt. The floor forming portion 41 extends from the front flange portion 43 toward the vehicle front side. The bent portion 41a is bent from the floor forming portion 41 toward an inner side in the vehicle lateral direction. The front wheel support portion 42 extends from the bent portion 41a toward the vehicle front side. A strut mount 44 is attached to the front wheel support portion 42. As illustrated in Figs. 2 and 3, a space 400 for feet of the passengers is secured in an area defined by the floor forming portion 41 and the bent portion 41a. In other words, the feet of the passengers are surrounded by the battery containing frame 30 and the front frame 40.

Fig. 6 is a schematic view illustrating a configuration around the front frame according to the first embodiment. A front wheel-side suspension apparatus is provided around the strut mount 44. The front wheel-side suspension apparatus includes a tie rod 71, a lower arm 72, and a strut 73. The tie rod 71 is used to steer the front wheel. The lower arm 72 supports a front axle 74 on which the front wheel is mounted on a lower side. The strut 73 supports the front axle 74 on an upper side.

Fig. 7 is a schematic view illustrating a configuration around the rear frame according to the first embodiment. A rear wheel suspension apparatus is provided around a strut mount 54. The rear wheel suspension apparatus includes a lower arm 82 and a strut 83. The lower arm 82 supports a rear axle 84 on which the rear wheel is mounted on a lower side. The strut 83 supports the rear axle 84 on an upper side. A drive shaft 81 output from the powertrain PT is connected to the rear axle 84.

The rear frame 50 includes a rear flange portion 53 and a powertrain support portion 51. The rear flange portion 53 is attached to the rear attachment surface 35 by a fixation method or member, such as a bolt. The powertrain support portion 51 extends from the rear flange portion 53 toward the rear side of the vehicle. The strut mount 54 is attached to the powertrain support portion 51. The powertrain support portion 51 includes a shaft through-hole 52, through which the drive shaft 81 output from the powertrain PT extends (refer to Fig. 7).

A body member including a plurality of pipes is provided between the battery containing frame 30 and the front frame 40. A corner reinforcement member 37c is joined between the side member 37a and the coupling member 37b of the passenger protection roll bar 37 to improve strength of a bent portion between the side member 37a and the coupling member 37b. A first framework member 61 curved from the upper side to the front side of the vehicle is provided between the corner reinforcement member 37c and the strut mount 44 of the front frame 40. The first vehicle framework member 61 includes a roof forming portion 61a, a windshield support portion 61b, and a strut support portion 61c. The roof forming portion 61a extends from the corner reinforcement member 37c along the roof of the vehicle. The windshield support portion 61b extends obliquely from the roof forming portion 61a toward the front side and the lower side of the vehicle, and supports the windshield. The strut support portion 61c extends from the windshield support portion 61b toward the lower side of the vehicle, and is connected to the strut mount 44.

A second framework member 63 is provided above the windshield support portion 61b. The second framework member 63 couples the right-side and left-side first framework members 61R and 61L to each other.

A pillar member 62 is provided between the first framework member 61 and the front frame 40. The pillar member 62 is connected to around a portion where the first framework member 61 and the second framework member 63 are coupled to each other, and a front end of the floor forming portion 41 of the front frame 40.

A third framework member 64a is provided below the windshield support portion 61b and on an upper end side of the strut support portion 61c. The third framework member 64a couples the right-side and the left-side first framework members 61R and 61L to each other. A fourth framework member 64b and a fifth framework member 64c is provided at approximately same height positions as this third framework member 64a. The fourth framework member 64b couples the right-side and left-side first framework members 61R and 61L to each other. The fifth framework member 64c couples the first framework member 61 and the pillar member 62 to each other. Similarly, a rear-side framework member 65 is provided between the battery containing frame 30 and the rear frame 50. The rear-side framework member 65 couples the passenger protection roll bar 37 and the strut mount 54 to each other therebetween.

A space where the passengers reside is secured by connecting the battery containing frame 30 and the front frame 40 via the first framework member 61 therebetween in this manner. Further, a stiffness of the body is secured by transmitting a force applied to the front-side strut mount 44 to the passenger protection roll bar 37 and also transmitting a force applied to the rear-side strut mount 54 to the passenger protection roll bar 37.

Now, a background and an object of the compact electric automobile according to the first embodiment will be described. Generally, recent vehicles do not attempt to secure the stiffness based on a framework member but instead employ a collision safety body including a crushable zone. This is because a weight as the vehicle is heavy and the vehicle body should absorb a force of inertia that would be applied at the time of a collision. On the other hand, in the case of compact electric automobiles like the first embodiment, a capacity and a size of the battery are limited unlike large electric vehicles on which a high-voltage large-sized battery unit is mounted. In addition, the vehicles should be formed so as to have an extremely light weight in light of securement of a driving force within a range of the limited battery capacity. As such, the compact electric automobiles have an extremely light vehicle weight and will be subjected to only a weak force of inertia that would be applied at the time of the collision, which raises a necessity of expecting that the vehicle would overturn or roll onto its side by being hit and flipped rather than expecting a deformation due to the crushable zone. Further, in the case of the compact electric automobiles designed in light of a thorough reduction in the weight, for example, simplifying the door portion may result in a failure to secure sufficient strength of the side surface of the vehicle. Therefore, regarding the collision from the side surface of the vehicle, in addition to the safety of the passengers, an influence of breakage of the battery and the electric system onto the passengers should be taken into consideration at the same time. In other words, both the safety of the passengers against the collision and the safety against a trouble with the electric system due to the collision should be always achieved at the same time.

Therefore, in the first embodiment, the compact electric automobile is configured in such a manner that the hollow-shaped battery containing frame 30 extends in the vehicle lateral direction and the passengers are seated thereon. In other words, the passengers are positioned within the range where the hollow-shaped portion of the battery containing frame 30 extends. Hollow-shaped members have extremely high compression strength in a direction in which they extend, whereby this configuration can secure the strength in the vehicle lateral direction against an input of an impact from the side-surface side, and achieve both the securement of the safety of the passengers and the protection of the battery at the same time. Further, the battery unit BAT is inserted from the opening portion 31a of the hollow-shaped portion, which can limit portions requiring liquid-tightness to only the closing member, thereby reducing the number of portions for which liquid-tightness should be secured. Therefore, even when being submerged in water to some degree due to heavy rain (for example, submersion within a range of the seat surface or lower), the compact electric automobile according to the first embodiment can effectively prevent an electric leak in the electric system and continue running. Further, the passenger protection roll bar 37 and the battery containing frame 30 are formed integrally with each other, which can prevent or reduce deformation of the components forming the body even when the vehicle is hit and flipped, thereby achieving securement of a space in the vehicle compartment and securement of safety regarding a collision between the passengers. In addition, the first embodiment employs a cage structure covered by pipe frames, and therefore can effectively protect the passengers even when the vehicle is hit and flipped while realizing the reduction in the weight. The compact electric automobile according to the first embodiment can include a measure for dampening the impact as being equipped with a buffer member, an airbag, and/or the like on an inner side (a passenger side) of the passenger protection roll bar 37 between the passenger protection roll bar 37 and the heads of the passengers.

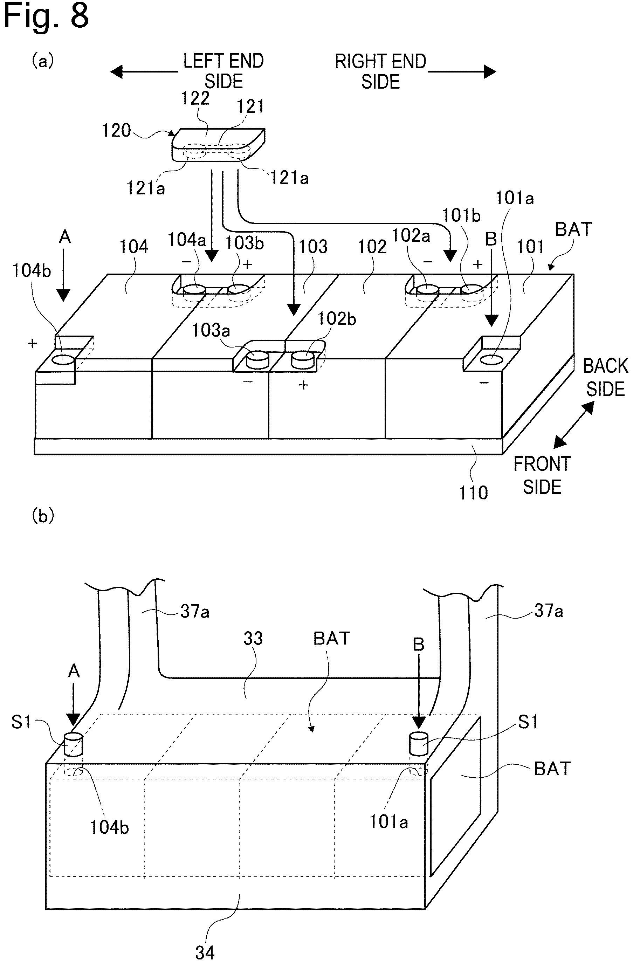

Figs. 8(a) and 8(b) are schematic views illustrating a battery configuration according to the first embodiment. The compact electric automobile according to the first embodiment includes the battery unit BAT, in which four small-sized batteries 101, 102, 103, and 104 are connected in series. The individual small-sized batteries 101 to 104 have the same specification, and include negative terminals 101a to 104a at one corners thereof and positive terminals 101b to 104b at positions diagonal to the negative terminals 101a to 104b as viewed from top surfaces, respectively. Fig. 8(a) is a schematic view illustrating the battery unit BAT with the small-sized batteries placed on a battery tray. Each of the small-sized batteries 101 to 104 is placed on a battery tray 110. In Fig. 8(a), the small-sized battery 101 is disposed in such a manner that the negative terminal 101a is located on a front side of Fig. 8(a) and one side closer to a right end of the battery unit and the positive terminal 101b is located on a back side of Fig. 8(a) and another side closer to a left end of the battery unit. Next, the small-sized battery 102 is placed adjacent to the small-sized battery 101. The small-sized battery 102 is disposed in such a manner that the negative terminal 102a is located on the back side of Fig. 8(a) and one side closer to the small-sized battery 101 and the positive terminal 102b is located on the front side of Fig. 8(a) and another side closer to the left end of the battery unit. In other words, the terminals of the adjacent small-sized batteries are positioned in such a manner that the negative terminal and the positive terminal are located adjacent to each other. The other small-sized batteries 103 and 104 are also disposed in a similar manner.

Next, as illustrated in Fig. 8(a), the adjacent negative terminal and positive terminal are electrically connected to each other via a plate-like connection member 120. The connection member 120 includes a bus bar 121, and an insulation member 122 covering this bus bar 121. Connection holes 121a, to which each of the terminals can be inserted, are formed at a lower side of the connection member 120, and the connection member 120 electrically connects the individual small-sized batteries 101 to 104 by being fitted to the adjacent terminals from above. In the case of the large electric automobiles and the like, a maximum voltage of the battery unit BAT becomes extremely high, whereby, generally, the bus bar should be securely fixed by welding or the like. On the other hand, in the case of the compact electric automobiles, the maximum voltage is low and the number of small-sized batteries is also small, whereby the electric connection can be established with a relatively simple configuration. The negative terminal 101a of the small-sized battery 101 and the positive terminal 104b of the small-sized battery 104 function as terminals representative of the battery unit BAT.

Fig. 8(b) is a schematic perspective view around the battery containing portion. The battery unit BAT is contained in a state placed on the battery tray 110 from the side of the battery containing portion 31. A first relay switch S1 and a second relay switch S2 are provided on both ends of the top surface 33 of the battery containing portion 31. The positive terminal 104b is positioned below the first relay switch S1 and the negative terminal 101a is positioned below the second relay switch S2. Then, the vehicle side and the battery unit BAT are electrically connected to each other by pressing each of the relay switches S1 and S2 as indicated by arrows A and B in Figs. 8(a) and 8(b) after containing the battery unit BAT into the battery containing portion 31.

The electric connection is established with use of the two relay switches in this manner, which contributes to the securement of the safety. In a case where the voltage of the battery unit BAT is a relatively low voltage (for example, 60 V or lower), one relay switch may be used without use of the two relay switches. For example, in a case where this automobile is configured in such a manner that the battery unit BAT is inserted to be contained into the battery containing portion 31 from a right side in Fig. 8(b), the electric connection may be established by connecting the positive terminal 104b positioned on a deep side to a terminal formed inside the battery containing portion 31 through insertion, and pressing only the first relay switch S1 after the insertion is completed. In this case, the number of relay switches can be reduced.

### [Advantageous Effects of First Embodiment]

In the following description, advantageous effects brought about by the battery protection member described in the description of the first embodiment will be listed.
(1) The battery protection member includes the hollow-shaped battery containing frame 30 extending in the vehicle lateral direction of the vehicle. The battery containing frame 30 includes the top surface 33 (a surface) where the seat 2 occupied by the driver is disposed on the outer surface side thereof. The battery containing frame 30 is configured to contain the battery unit BAT (a battery) on the inner surface side 32 thereof.
   Therefore, the first embodiment can achieve both the protection of the passengers and the protection of the battery unit BAT at the same time.
(2) In the battery protection member described in the above-described item (1), the battery containing frame 30 includes the opening portion 31a for mounting the battery unit BAT onto the inner surface side 32 from the end in the vehicle lateral direction.
   Therefore, the first embodiment allows the battery unit BAT to be easily mounted. Further, the first embodiment can easily realize the liquid-tightness of the battery unit BAT by liquid-tightly sealingly closing only the opening portion 31a.
(3) In the battery protection member described in the above-described item (1), the battery containing frame 30 includes the passenger protection roll bar 37 hung across the battery containing frame 30 in the vehicle lateral direction.
   Therefore, the first embodiment can protect the passengers even when the vehicle, for example, overturns or rolls onto its side.
(4) The battery protection member described in the above-described item (3) includes the front frame 40 forming the floor provided around and/or under the foot of the driver, and the body member connecting the passenger protection roll bar 37 and the front frame 40 to each other and forming the space where the driver resides.
   Therefore, the first embodiment can easily provide the framework of the vehicle that can protect the passengers while achieving the reduction in the weight.
(5) The battery protection member described in the above-described item (1) includes the front frame 40 provided integrally with the battery containing frame 30 and forming the floor provided around and/or under the foot of the driver.
   Therefore, the first embodiment can improve the strength of the battery containing frame 30 and also secure the strength of the space where the feet of the passengers reside, thereby achieving both the protection of the passengers and the protection of the battery unit BAT at the same time.
(6) In the battery protection member described in the above-described item (5), the front frame 40 is the different member from the battery containing frame 30, and the front frame 40 and the battery containing frame 30 are integrated with each other by the fixation method or member.
   Therefore, the first embodiment allows each of the frames to be individually manufactured, thereby allowing the frames to be manufactured with use of different kinds of materials and also improving manufacturability.
(7) The battery protection member described in the above-described item (5) includes the rear frame 50 provided integrally with the battery containing frame 30, and configured in such a manner that the rear-side suspension apparatus of the vehicle is mounted at the opposite position from the front frame 40 in the vehicle longitudinal direction.
   Therefore, the first embodiment allows the framework of the entire vehicle body to be easily formed with use of these frames.
(8) In the battery protection member described in the above-described item (7), the rear frame 50 is the different member from the battery containing frame 30, and is integrated with the battery containing frame 30 by the fixation method or member.
   Therefore, the first embodiment allows each of the frames to be individually manufactured, thereby allowing the frames to be manufactured with use of different kinds of materials and also improving manufacturability.
(9) In the battery protection member described in the above-described item (1), the battery unit BAT is the battery pack in which the plurality of small-sized batteries 101 to 104 (batteries) is integrated. The plurality of small-sized batteries 101 to 104 includes the negative terminals 101a to 104a and the positive terminals 101b to 104b, respectively. The battery pack is arranged in such a manner that the negative terminal and the positive terminal of the plurality of batteries adjacent to each other are positioned close to each other, and the negative terminal and the positive terminal positioned close to each other are connected via the connection member 120 (a bus bar). The battery pack includes the positive terminal 104b and the negative terminal 101a (a connection terminal) configured to connect the remaining negative terminal and positive terminal to the driving apparatus. The battery containing frame 30 includes the first and second relay switches S1 and S2 (a connection target portion) configured to be connected to the connection terminal.

Therefore, the first embodiment allows the small-sized batteries to be efficiently connected to each other, and also allows the battery unit BAT and the vehicle side to be easily and safely connected to each other.

### [Second Embodiment]

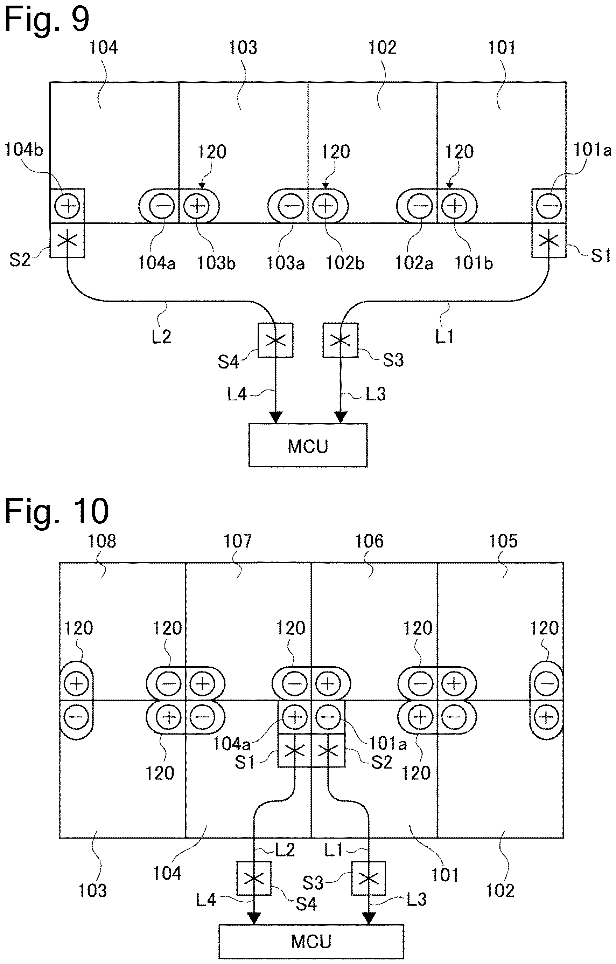

Next, a second embodiment will be described. The second embodiment is configured basically similarly to the first embodiment and therefore will be described focusing only on differences therefrom. Fig. 9 is a schematic view illustrating a configuration of a battery unit according to the second embodiment. In the first embodiment, the respective terminals of the small-sized batteries 101 to 104 are disposed at the diagonal positions. On the other hand, the small-sized batteries 101 to 104 according to the second embodiment are different therefrom in terms of the respective terminals being disposed along one side. The respective terminals are connected via the connection member 120 therebetween, and are also connected to the vehicle side via the first and second relay switches S1 and S2, similarly to the first embodiment. Further, electric wirings L1 and L2 are connected to the first and second relay switches S1 and S2, and connector switches S3 and S4 are provided between the first and switch relay switches S1 and S2 and a main control unit MCU, respectively. This configuration can improve simplicity and safety of the electric connection.

Next, a third embodiment will be described. The third embodiment is configured basically similarly to the second embodiment and therefore will be described focusing only on differences therefrom. Fig. 10 is a schematic view illustrating a configuration of a battery unit according to the third embodiment. The second embodiment has been described as the example in which the four small-sized batteries 101 to 104 are mounted. On the other hand, the third embodiment is different therefrom in terms of including eight small-sized batteries 101 to 108. Further, in the second embodiment, the first and second relay switches S1 and S2, which establish the connection to the vehicle side, are disposed at the both ends of the battery containing frame 30. On the other hand, the third embodiment is different therefrom in terms of the first and second relay switches S1 and S2 being disposed at the central portion of the battery containing frame 30. This configuration allows the relay switches and the like to be protected even when the impact is applied from the side-surface side.

### [Fourth Embodiment]

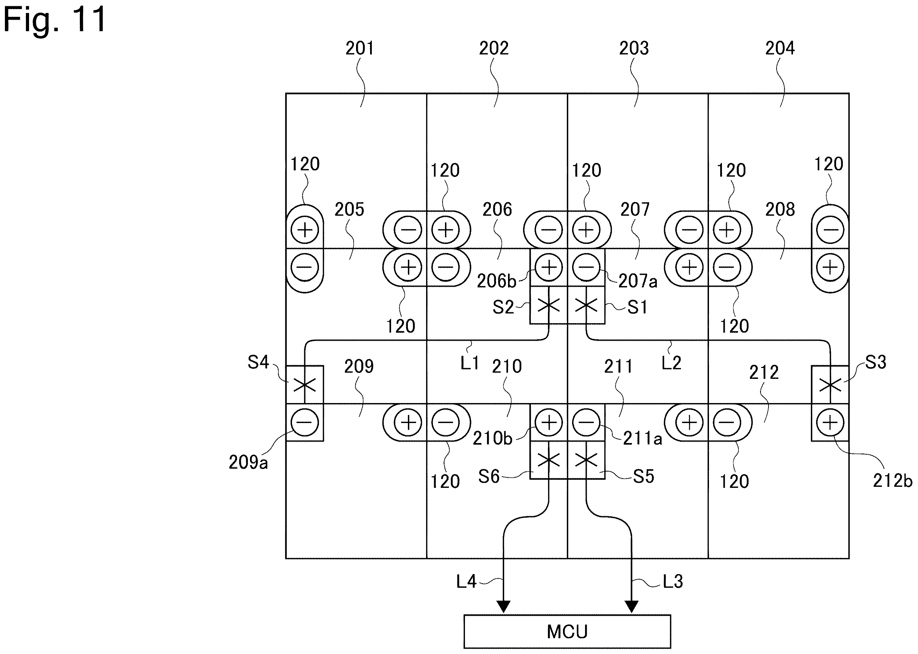

Next, a fourth embodiment will be described. The fourth embodiment is configured basically similarly to the third embodiment and therefore will be described focusing only on differences therefrom. Fig. 11 is a schematic view illustrating a configuration of a battery unit according to the fourth embodiment. The third embodiment has been described as the example in which the eight small-sized batteries 101 to 108 are mounted. On the other hand, the fourth embodiment is different therefrom in terms of including twelve small-sized batteries 201 to 212. Further, in the third embodiment, the first and second relay switches S1 and S2, which establish the connection to the vehicle side, are disposed at the central portion of the battery containing frame 30. On the other hand, in the fourth embodiment, the first and second relay switches S1 and S2 are disposed at the central portion, and, further, third and fourth relay switches S3 and S4 are disposed around front sides of the both ends of the battery containing frame 30 while the small-sized batteries 201 to 208 in the first and second rows and the small-sized batteries 209 to 212 in the third row are connected to each other via harnesses L1 and L2. Then, fifth and sixth relay switches S5 and S6 are disposed around a generally central front portion of the battery containing frame 30. Even if the battery unit BAT has a high voltage since the number of small-sized batteries increases in this manner, this configuration allows each of the small-sized batteries to be electrically connected after being contained in the battery containing frame 30, thereby succeeding in the securement of the safety.

### [Fifth Embodiment]

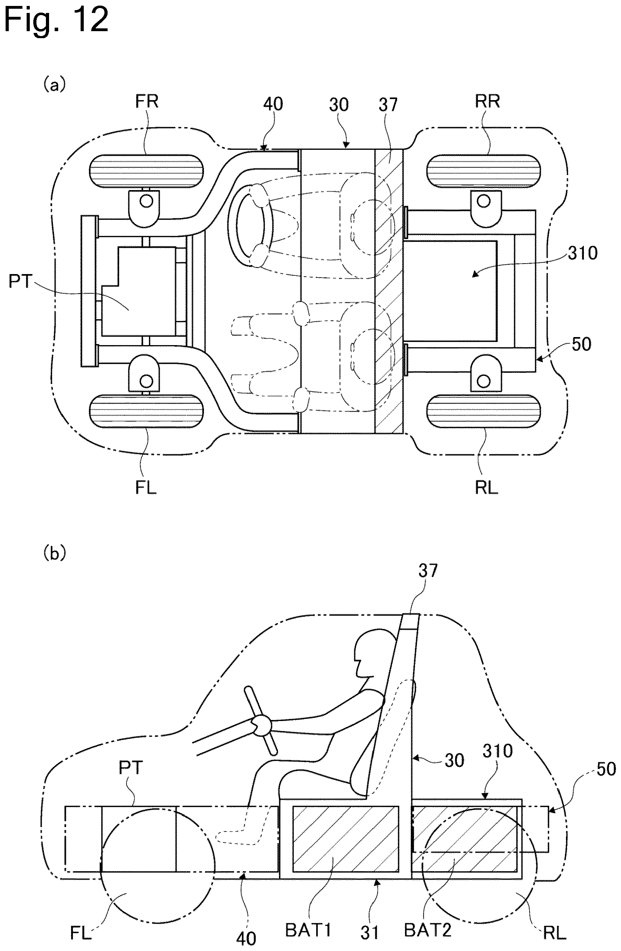

Next, a fifth embodiment will be described. The fifth embodiment is configured basically similarly to the first embodiment and therefore will be described focusing only on differences therefrom. Figs. 12(a) and 12(b) are schematic views illustrating a compact vehicle including a battery protection member according to the fifth embodiment. The first embodiment has been described as the example in which the powertrain PT is disposed on the rear wheel side. On the other hand, the fifth embodiment is different therefrom in terms of the powertrain PT being disposed on the front wheel side. Further, since the powertrain PT is removed from the rear frame 50 on the rear wheel side, the portion at and around the center of the battery containing frame 30 in the vehicle lateral direction is expanded toward the rear side of the vehicle with a battery unit BAT2 further mounted in addition to a battery unit BAT1 similar to the first embodiment for effective utilization of this space. As a result, the battery capacity can increase. Further, the battery unit BAT2 is covered on both side surfaces thereof with the rear frame 50, which can improve the safety against the impact from the side.

### [Sixth Embodiment]

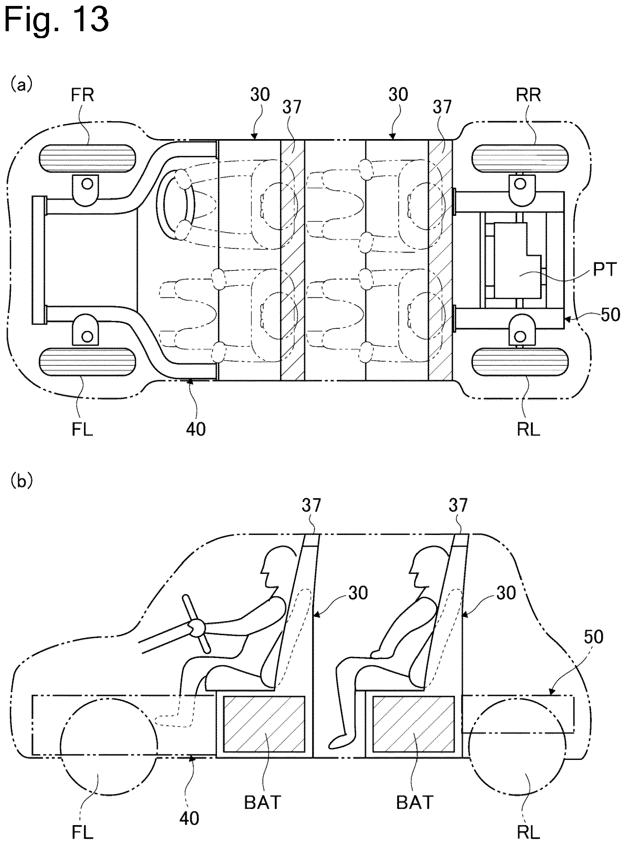

Next, a sixth embodiment will be described. The sixth embodiment is configured basically similarly to the first embodiment and therefore will be described focusing only on differences therefrom. Figs. 13(a) and 13(b) are schematic views illustrating a compact vehicle including a battery protection member according to the sixth embodiment. The first embodiment has been described based on the two-seated compact electric automobile. On the other hand, the sixth embodiment is configured as a four-seated electric vehicle with battery containing frames 30 arrayed in two rows in the longitudinal direction. The battery containing frames 30 are unitized as modules and are disposed in series in the vehicle longitudinal direction in this manner, which can provide an electric vehicle capable of accommodating a further larger number of passengers. The sixth embodiment is not limited to the four-seated vehicle, and may provide an electric vehicle that allows more passengers to ride therein by further adding the battery containing frame 30.

In the following description, technical features recognizable from the above-described embodiments will be listed.
(10) A battery protection member includes a hollow-shaped battery containing frame extending in a vehicle lateral direction of a vehicle and having a dimension in the vehicle lateral direction that is equal to or longer than a battery contained therein, and a front frame provided integrally with the battery containing frame. A seat of a driver is disposed on the battery containing frame and a foot of the driver is positioned on the front frame.

Therefore, the embodiments of the present invention can improve strength of the battery containing frame and also secure strength of a space where feet of the passengers reside, thereby achieving both the protection of the passengers and the protection of the battery at the same time.
(11) In the battery protection member described in the above-described item (10), the battery containing frame includes an opening portion for mounting the battery onto the inner surface side from an end in the vehicle lateral direction.
   Therefore, the embodiments of the present invention allow the battery to be easily mounted. Further, the embodiments of the present invention can easily realize liquid-tightness of the battery by liquid-tightly sealingly closing only the opening portion.
(12) In the battery protection member described in the above-described item (10), the battery containing frame includes a passenger protection roll bar hung across the battery containing frame in the vehicle lateral direction.
   Therefore, the embodiments of the present invention can protect the passengers even when the vehicle, for example, overturns or rolls onto its side.
(13) A battery protection member includes a hollow-shaped battery containing frame extending in a vehicle lateral direction of a vehicle and having a dimension in the vehicle lateral direction that is equal to or longer than a battery contained therein, a front frame provided integrally with the battery containing frame, and a rear frame provided integrally with the battery containing frame at an opposite position from the front frame in a vehicle longitudinal direction. A seat of a driver is disposed on the battery containing frame and a foot of the driver is positioned on the front frame. A rear wheel-side suspension apparatus of the vehicle is mounted on the rear frame.
   Therefore, the embodiments of the present invention allow a framework of the entire vehicle body to be easily formed with use of these frames. Further, the embodiments of the present invention can improve strength of the battery containing frame and also secure strength of a space where feet of the passengers reside, thereby achieving both the protection of the passengers and the protection of the battery at the same time.
(14) In the battery protection member described in the above-described item (13), the battery containing frame includes an opening portion for mounting the battery onto the inner surface side from an end in the vehicle lateral direction.
   Therefore, the embodiments of the present invention allow the battery to be easily mounted. Further, the embodiments of the present invention can easily realize liquid-tightness of the battery by liquid-tightly sealingly closing only the opening portion.
(15) In the battery protection member described in the above-described item (13), the battery containing frame includes a passenger protection roll bar hung across the battery containing frame in the vehicle lateral direction.
   Therefore, the embodiments of the present invention can protect the passengers even when the vehicle, for example, overturns or rolls onto its side.
(16) The battery protection member described in the above-described item (15) includes a body member connecting the passenger protection roll bar and the front frame to each other and forming a space where the driver resides.
   Therefore, the embodiments of the present invention can easily provide a framework of the vehicle that can protect the passengers while achieving a reduction in a weight.
(17) In the battery protection member described in the above-described item (13), the battery containing frame, the front frame, and the rear frame are formed as different members from one another, and the front frame and the rear frame are each integrally fixed to the battery containing frame by a fixation method or member.

Therefore, the embodiments of the present invention allow each of the frames to be individually manufactured, thereby allowing the frames to be manufactured with use of different kinds of materials and also improving manufacturability.

### [Other Embodiments]

Having described the present invention based on each of the embodiments thereof, even another configuration is also included in the scope of the present invention. For example, the embodiments have been described based on the example in which the present invention is applied to the electric automobile that drives the driving wheels with use of the single driving motor, but the vehicle to which the present invention is applied may be configured to include an in-wheel motor on the driving wheel. Further, the vehicle to which the present is applied is not limited to the electric automobile, and may be a hybrid vehicle including an internal combustion engine and a motor. Further, the battery may be a replaceable battery, or may be configured to be able to be charged by an external charger without being detached from the vehicle. Further, in the embodiments, the battery containing frame, and the front frame and the rear frame are integrated with each other by the fixation method or member, such as the bolt, but may be joined to each other by welding or the like.

Having described merely several embodiments of the present invention, those skilled in the art will be able to easily understand that the embodiments described as the examples can be modified or improved in various manners without substantially departing from the novel teachings and advantages of the present invention. Therefore, such modified or improved embodiments are intended to be also included in the technical scope of the present invention. The above-described embodiments may be arbitrarily combined with each other or one another.

The present application claims priority under the Paris Convention to Japanese Patent Application No. 2014-232482 filed on November 17, 2014. The entire disclosure of Japanese Patent Application No. 2014-232482 filed on November 17, 2014 including the specification, the claims, the drawings, and the abstract is incorporated herein by reference in its entirety.

### REFERENCE SIGNS LIST

- 1: steering wheel
- 2: seat
- 30: battery containing frame
- 31: battery containing portion
- 31a: opening portion
- 32: inner surface side
- 33: upper surface
- 34: front-side attachment surface
- 35: rear-side attachment surface
- 36: floor surface
- 37: passenger protection roll bar
- 37a: side member
- 37b: coupling member
- 37c: corner reinforcement member
- 40: front frame
- 40L: left-side front frame
- 40R: right-side front frame
- 41: floor forming portion
- 41a: bent portion
- 42: front wheel support portion
- 43: front flange portion
- 44: strut mount
- 50: rear frame
- 51: powertrain support portion
- 52: shaft through-hole
- 53: rear flange portion
- 54: strut mount
- 61: framework member
- 61: vehicle framework member
- 61: first vehicle framework member
- 61R, 61L: framework member
- 61a: roof forming portion
- 61b: windshield support portion
- 61c: strut support portion
- 62: pillar member
- 63: second framework member
- 64a: third framework member
- 64b: fourth framework member
- 64c: fifth framework member
- 65: rear-side framework member
- 110: powertrain
- 120: connection member
- 121: bus bar
- 121a: connection hole
- 122: insulation member
- 201 to 212: small-sized battery
- 101 to 108: small-sized battery
- 101a to 104a: negative terminal
- 101b to 104b: positive terminal
- 400: space for feet
- BAT: battery unit
- PT: powertrain
- FL and FR: front wheel
- RL and RR: rear wheel
- S1: first relay switch
- S2: second relay switch

## Claims

1. A battery protection member comprising a hollow-shaped battery containing frame that extends in a vehicle lateral direction of a vehicle,
the battery containing frame including a surface where a seat occupied by a driver is disposed on an outer surface side thereof,
the battery containing frame being configured to contain a battery on an inner surface side thereof.

2. The battery protection member according to claim 1, wherein the battery containing frame includes an opening portion for mounting the battery onto the inner surface side from an end in the vehicle lateral direction.

3. The battery protection member according to claim 1, wherein the battery containing frame includes a passenger protection roll bar hung across the battery containing frame in the vehicle lateral direction.

4. The battery protection member according to claim 3, comprising:
a front frame that forms a floor provided around and/or under a foot of the driver; and
a body member that connects the passenger protection roll bar and the front frame to each other, and that forms a space where the driver resides.

5. The battery protection member according to claim 1, comprising a front frame that is provided integrally with the battery containing frame and that forms a floor provided around and/or under a foot of the driver.

6. The battery protection member according to claim 5, wherein the front frame is a different member from the battery containing frame, and the front frame and the battery containing frame are integrated with each other by a fixation member.

7. The battery protection member according to claim 5, comprising a rear frame that is provided integrally with the battery containing frame, and that is configured in such a manner that a rear-side suspension apparatus of the vehicle is mounted at an opposite position from the front frame in a vehicle longitudinal direction.

8. The battery protection member according to claim 7, wherein the rear frame is a different member from the battery containing frame, and is integrated with the battery containing frame by a fixation member.

9. The battery protection member according to claim 1, wherein the battery is a battery pack in which a plurality of batteries is integrated,
wherein the plurality of batteries each include a negative terminal and a positive terminal,
wherein the battery pack is arranged in such a manner that the negative terminal and the positive terminal of the plurality of batteries adjacent to each other are positioned close to each other, and the negative terminal and the positive terminal positioned close to each other are connected via a bus bar, the battery pack including a connection terminal configured to connect the remaining negative terminal and positive terminal to a driving apparatus, and
wherein the battery containing frame includes a connection target portion configured to be connected to the connection terminal.

10. A battery protection member comprising:
a hollow-shaped battery containing frame extending in a vehicle lateral direction of a vehicle and having a dimension in the vehicle lateral direction that is equal to or longer than a battery contained therein; and
a front frame provided integrally with the battery containing frame,
wherein a seat of a driver is disposed on the battery containing frame and a foot of the driver is positioned on the front frame.

11. The battery protection member according to claim 10, wherein the battery containing frame includes an opening portion for mounting the battery onto the inner surface side from an end in the vehicle lateral direction.

12. The battery protection member according to claim 10, wherein the battery containing frame includes a passenger protection roll bar hung across the battery containing frame in the vehicle lateral direction.

13. A battery protection member comprising:
a hollow-shaped battery containing frame that extends in a vehicle lateral direction of a vehicle and having a dimension in the vehicle lateral direction that is equal to or longer than a battery contained therein;
a front frame provided integrally with the battery containing frame; and
a rear frame provided integrally with the battery containing frame at an opposite position from the front frame in a vehicle longitudinal direction, wherein a seat of a driver is disposed on the battery containing frame and a foot of the driver is positioned on the front frame, and
wherein a rear wheel-side suspension apparatus of the vehicle is mounted on the rear frame.

14. The battery protection member according to claim 13, wherein the battery containing frame includes an opening portion for mounting the battery onto the inner surface side from an end in the vehicle lateral direction.

15. The battery protection member according to claim 13, wherein the battery containing frame includes a passenger protection roll bar hung across the battery containing frame in the vehicle lateral direction.

16. The battery protection member according to claim 15, comprising a body member that connects the passenger protection roll bar and the front frame to each other, and that forms a space where the driver resides.

17. The battery protection member according to claim 13, wherein the battery containing frame, the front frame, and the rear frame are formed as different members from one another, and the front frame and the rear frame are each integrally fixed to the battery containing frame by a fixation method or member.

18. A battery protection member comprising a hollow-shaped battery containing frame extending in a vehicle lateral direction of a vehicle,
the battery containing frame including an outer surface where a seat occupied by a driver is disposed, the outer surface being provided on an outer side of the battery containing frame, and an inner surface defining a battery containing portion in which a battery is contained, the inner surface being provided on an inner side of the battery containing frame.
